Europäisches Patentamt

European Patent Office

Office européen des brevets

(19)

(11) Veröffentlichungsnummer : **0 436 574 B1**

(12) **EUROPÄISCHE PATENTSCHRIFT**

(45) Veröffentlichungstag der Patentschrift :
**19.11.92 Patentblatt 92/47**

(51) Int. Cl.⁵ : **B01J 2/20, B29B 9/06,
B29C 47/30**

(21) Anmeldenummer : **89910095.2**

(22) Anmeldetag : **12.09.89**

(86) Internationale Anmeldenummer :
**PCT/EP89/01062**

(87) Internationale Veröffentlichungsnummer :
**WO 90/03217 05.04.90 Gazette 90/08**

(54) **VORRICHTUNG ZUM GRANULIEREN EINER UNTER SCHWERKRAFT NICHT FLIESSFÄHIGEN, PLASTISCHEN FORMMASSE UND VERWENDUNG EINES EXTRUDERS.**

(30) Priorität : **21.09.88 DE 3832006**

(43) Veröffentlichungstag der Anmeldung :
**17.07.91 Patentblatt 91/29**

(45) Bekanntmachung des Hinweises auf die
Patenterteilung :
**19.11.92 Patentblatt 92/47**

(84) Benannte Vertragsstaaten :
**AT BE CH DE FR GB IT LI NL**

(56) Entgegenhaltungen :
**BE-A- 672 533**

(73) Patentinhaber : **Henkel
Kommanditgesellschaft auf Aktien
Postfach 1100 Henkelstrasse 67
W-4000 Düsseldorf-Holthausen (DE)**

(72) Erfinder : **PAWELCZYK, Hubert
Alt Eller 23
W-4000 Düsseldorf 1 (DE)**
Erfinder : **CARDUCK, Franz-Josef
Landstrasse 18
W-5657 Haan (DE)**

**Beschreibung**

Die Erfindung betrifft eine Vorrichtung zum Granulieren einer unter Schwerkraft nich fließfähigen, plastischen Formmasse, insbesondere eines für Waschmittel einsetzbaren Enzymkonzentrats, mit einem sich an einen Extruder anschließenden Granulierkopf, der auslaßseitig eine Vielzahl von Durchgangsbohrungen und extruderseitig einen mit Abstand von der Extruderschnecke und von den Durchgangsbohrungen angeordneten, als Lochplatte ausgebildeten Vorveiteiler aufweist.

Heutige Waschmittel enthalden Enzymgranulate, z.B. Proteasen, Amylasen, Lipasen. Beim Herstellen solcher Enzymgranulate ist es wichtig, ein staubfreies, in der Zusammensetzung homogenes und im äußeren erscheinungsbild gleichförmiges Produkt zu erhalten. Dabei umfaßt der Begriff äußeres Erscheinungsbild sowohl Form, Farbe und sonstiges Aussehen. Da sich solche Granulate im Waschmittelpulver nich entmischen sollen, müssen diese Enzymgranulate vergleichbare Korngrößen wie das übrige Granulat haben. Daher ist beim Granulieren mit einem Extruder der Einsatz von Düsenplatten mit Lochdurchmessern von weniger als 0,8 mm erforderlich.

Diese Enzymgranulate bestehen nicht nur aus den flüssigen Enzymkonzentraten, sondern auch aus Stellmitteln, die Zeolithe, Tripolyphosphate, Stärke, Zellulose, Methylzellulose, Carboxymethylzellulose, Wachse, wasserlösliche Polymere usw. enthalten.

Ein weiteres Problem stellt die gleichmäßige Verteilung der zu verarbeitenden Masse auf den gesamten Querschnitt der Düsenplatten enthaltenden Formgebungsplatten dar. Besonders groß ist das Problem, wenn der Querschnitt der Formgebungsplatte mit z. B. 3 000 bis 6 000 Einzelbohrungen wesentlich größer als der Querschnitt der Austrittsöffnung der Formmasse am Ende der Extruderschnecke ist. Wird keine gleichmäßige Verteilung der zu verarbeitenden Formmasse über den gesamten Querschnitt der Formgebungsplatte erreicht, so tritt die Masse aus den einzelnen Öffnungen mit unterschiedlichen Geschwindigkeiten aus. Damit werden aber die austretenden Stränge von dem vor der Formgebungsplatte rotierenden Messer in unterschiedlich lange Granulate geschnitten. Ein gleichmäßiges Produkt kann so nicht erhalten werden.

Eine Vorrichtung der eingangs genannten Art ist zwar aus der DE-A- 25 57 166 bekannt, aber bei dem bekannten Granulierkopf sind nur wenige, höchstens etwa 20 Durchgangsbohrungen vorgesehen, so daß das genannte Problem der gleichmäßigen Verteilung der Formmasse nicht auftritt. Bei der bekannten Vorrichtung wird die Formmasse allein schon deshalb gleichmäßig verteilt, weil sämtliche Durchgangsbohrungen symmetrisch zueinander und in gleichem Abstand von der Mittelachse der Vorrichtung angeordnet sind.

Der Erfindung liegt daher die Aufgabe zugrunde, eine Vorrichtung zum Granulieren der eingangs genannten Art zu schaffen, welche eine gleichmäßige Verteilung der zu verarbeitenden Formmasse über den gesamten Querschnitt der Formgebungsplatte auch dann ermöglicht, wenn der Querschnitt der Formgebungsplatte wesentlich größer als der Querschnitt der Austrittsöffnung der Formmasse am Ende der Extruderschnecke ist.

Diese Aufgabe wird erfindungsgemäß dadurch gelöst, daß bei einer Vorrichtung der eingangs genannten Art dem Vorverteiler extruderseitig ein Verdrängerkegel vorgeordnet ist, daß die Durchgangsbohrungen in einer Trägerplatte ausgebildet sind und am vorderen Ende der Trägerplatte jeweils eine Lochscheibe aufweisen, deren Bohrungen einen einlaßseitigen Bereich mit größerem und einen auslaßseitigen Bereich mit kleinerem Querschnitt aufweisen, wobei der Übergangsbereich zwischen den beiden Bereichen gegen die Längsachse der Bohrungen mit einem Winkel von 55° bis 65° geneigt ist und daß der Verdrängerkegel und die Umlenkplatte derart ausgebildet sind, daß die Längen der Wege der zu granulierenden Formmasse zu den der Längsachse des Granulierkopfes am nächsten und zu den am weitesten entfernt liegenden Bohrungen des Vorverteilers in etwa gleich sind.

Erfindungsgemäß wird erreicht, daß das Verhältnis von Länge zu Durchmesser beim Granulat über den gesamten Querschnitt der Formgebungsplatte, die hier auch Trägerplatte genannt ist, gleich ist. Ebenso wird erreicht, daß die Drücke, mit denen die Formmasse in die Bohrungen des Vorverteilers gepreßt wird sich möglichst wenig voneinander unterscheiden.

Als eine besonders vorteilhafte Ausgestaltung hat sich herausgestellt, wenn die Durchgangsbohrungen im wesentlichen den gleichen Durchmesser wie die Lochscheiben haben. Hier, wie in der nachfolgenden Beschreibung bedeuten die Begriffe "im wesentlichen gleich" und "in etwa gleich", daß die Abweichungen höchstens 10 % betragen.

Besonders günstig zum gleichmäßigen Verteilen der Formmasse ist ferner eine extruderseitig hinter dem Verdrängerkegel angeordnete Umlenkplatte, deren axiale Bohrung sich im wesentlichen vom Durchmesser der Extruderschnecke bis im wesentlichen zum Durchmesser des Verteilers vergrößert. Durch diese Umlenkplatte wird ein geordneter Weg der Formmasse über den Verdrängerkegel auf die Querschnittsfläche des Vorverteilers erreicht.

Um Störungen im Fluss der Formmasse im Bereich des Verdrängerkegel zu vermeiden, wird vorgeschlagen, daß die inneren Flächen der Umlenkplatte ausschließlich abgerundete Kanten aufweisen.

Um ein gleichmäßiges Fließen der Formmasse von der Extruderschnecke zwischen der Umlenkplatte und dem Verdrängerkegel zu gewährleisten, wird vorgeschlagen, daß der Abstand zwischen der zum Extruder weisenden Fläche des Verdrängerkegels und der dieser gegenüberliegenden inneren Fläche der Umlenkplatte im wesentlichen konstant ist. Ein gleichmäßigerer Fluß ermöglicht nämlich auch eine gleichmäßigere Verteilung der Formmasse auf die zum Extruder weisende Querschnittsfläche des Vorverteilers.

Ferner ist es für einen gleichmäßigen Einpreßdruck der Formmasse in die Bohrungen des Vorverteilers günstig, wenn der Abstand zwischen der extruderseitigen äußeren Querschnittsfläche des Vorverteilers und der dieser Fläche gegenüber liegenden Fläche des Verdrängerkegels mindestens 3 % des Durchmessers des Vorverteilers beträgt.

Die Formgestaltung der Kapillaren in der Lochscheibe ist für das Herstellen von gleichmäßigen Granulaten wichtig. Dazu wird vorgeschlagen, daß der Durchmesser des auslaßseitigen Bereichs der Bohrungen in der Lochscheibe zwischen 0,5 und 1,0 mm liegt. Vorteilhaft ist auch, wenn die Länge der Bohrung in der Lochscheibe zwischen dem 1,5- und 2-fachen des Durchmessers des auslaßseitigen Bereichs liegt. Eine weitere vorteilhafte Ausgestaltung besteht darin, daß der Durchmesser des einlaßseitigen Bereichs der Bohrung in der Lochscheibe zwischen dem 1,7- und 3-fachen des Durchmessers des auslaßseitigen Bereichs liegt.

Die Erfindung betrifft auch das Verwenden eines Extruders der oben genannten Art zum Granulieren von Enzymkonzentraten für Waschmittel. Für eine solche Anwendung ist ein solcher Extruder nämlich besonders gut geeignet. In diesem Fall wird weiterhin vorgeschlagen, daß das Enzymkonzentrat mit Drücken von 80 bis 200 bar, insbesondere von 110 bis 150 bar durch den Granulierkopf gepreßt wird.

Im folgenden wird ein Ausführungsbeispiel der Erfindung anhand von Zeichnungen näher beschrieben.

Es zeigen:

Figur 1: Einen Längsschnitt durch einen Granulierkopf eines Extruders gemäß der Erfindung und

Figur 2: Den Längsschnitt einer Bohrung in der Lochscheibe gemäß der Erfindung.

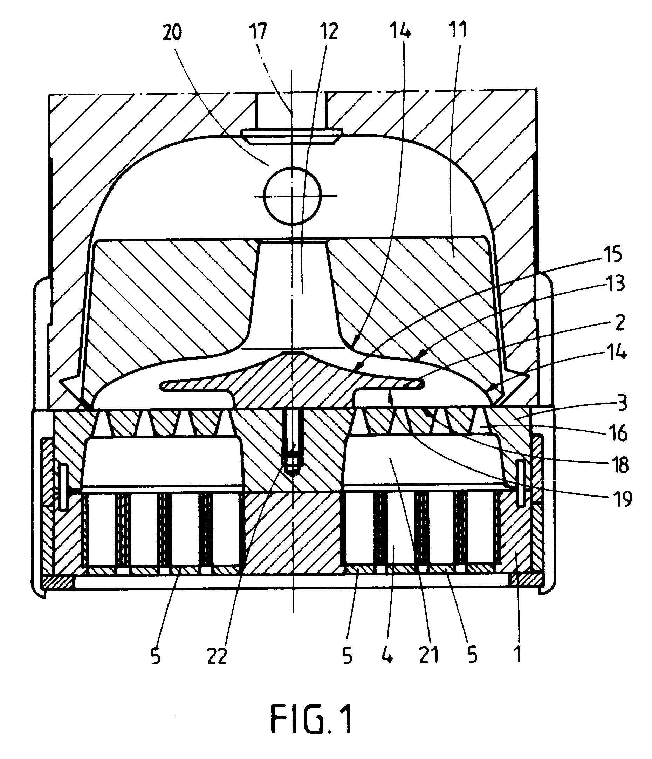

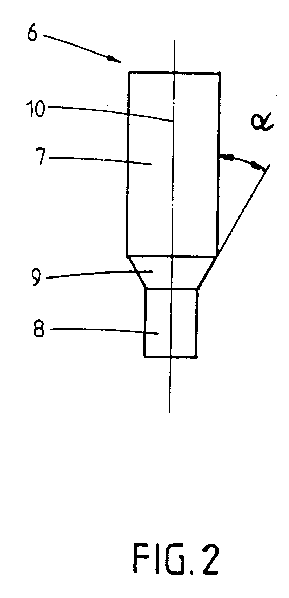

In Figur 1 ist der Querschnitt eines Granulierkopfes entsprechend der Erfindung dargestellt. Bei (17) ist die Längsachse des Granulierkopfes eingezeichnet. Die Formmasse tritt bei (20) in den Granulierkopf ein, durchläuft die Umlenkplatte (11), fließt entlang dieser Platte und dem Verdrängerkegel (2) auf den hinteren Querschnitt (18) des Vorverteilers (3). Durch dessen Öffnungen, den Bohrungen (16), wird die Formmasse in einen freien Bereich (21) zwischen dem Vorverteiler (3) und der Trägerplatte (1) gepreßt. Diese Trägerplatte (1) ist an anderer Stelle als Formgebungsplatte bezeichnet. Sie enthält an ihrer auslaßseitigen Stirnseite eine Vielzahl von Lochscheiben (5), welche Bohrungen (6) mit einem Längsschnitt gemäß Figur 2 aufweisen. Hinter der Trägerplatte (1) ist ein in der Zeichnung nicht dargestelltes rotierendes Messer angeordnet, das die austretenden dünnen Stränge zu Granulaten zerschneidet.

Die Trägerplatte (1) weist eine Vielzahl, in konzentrischen Kreisen um die Längsachse des Granulierkopfes angeordnete Durchgangsbohrungen (4) auf, an deren auslaßseitigen Öffnungen die Lochscheiben (5) angebracht sind. Die dargestellte Trägerplatte enthält 75 solcher Durchgangsbohrungen (4), von denen jede stirnseitig durch Lochscheiben (5) mit je 87 kapillarartigen Bohrungen (6) verschlossen sind.

Diese, in Figur 2 dargestellten Bohrungen (6) haben einen stirnseitigen, engen, auslaßseitigen Bereich (8) und einen einlaßseitigen Bereich (7). Die Längenangaben in Figur 2 haben als Maßeinheit mm. Der auslaßseitige Bereich (8) hat einen Durchmesser von 0,7 mm, der einlaßseitige Bereich (7) einen Durchmesser von 1,2 mm. Die Länge des auslaßseitigen Bereichs (8) beträgt 1,4 mm, die Länge des einlaßseitigen Bereichs (7) 4,5 mm. Im Übergangsbereich (9) beträgt die Neigung der Wand gegenüber der Längsachse (10) 60°.

Wenn die Formmasse, aus dem Extruder kommend, durch die axiale Bohrung (12) fließt, trifft sie auf den Verdrängerkegel (2) und fließt zwischen der zum Extruder weisenden Fläche (15) des Verdrängerkegels (2) und der dieser gegenüberliegenden inneren Fläche (13) der Umlenkplatte (11) auf den zum Extruder zeigenden Querschnitt (18) des Vorverteilers (3) zu. Dieser Kanal darf sich weder verengen noch erweitern. Damit ein ungestörter Fluss gewährleistet ist, haben die inneren Flächen (13) der Umlenkplatte (11) auschließlich abgerundete Kanten (14).

An der zum Extruder gerichteten äußeren Querschnittsfläche (18) des Vorverteilers (3) tritt dann die Formmasse durch die Öffnungen (16) in den Raum (21) zwischen dem Vorverteiler (3) und der Trägerplatte (1) ein. Bei (19) ist die der äußeren Querschnittsfläche (18) des Vorverteilers (3) gegenüberliegende Fläche des Verdrängerkegels (2) dargestellt.

Der Durchmesser der Gesamtplatte beträgt 30 cm, der Verdrängerkegel (2) ist bei (22) durch ein Schraubgewinde fest mit dem Vorverteiler (3) verbunden.

## Patentansprüche

1. Vorrichtung zum Granulieren einer unter Schwerkraft nicht fließfähigen, plastischen Formmasse, insbesondere eines für Waschmittel einsetzbaren Enzymkonzentrats, mit einem sich an einen Extruder anschließenden Granulierkopf, der auslaßseitig eine Vielzahl von Durchgangsbohrungen und extruderseitig einen mit Abstand von der Extruderschnecke und von den Durchgangsbohrungen angeordneten, als Lochplatte ausgebildeten Vorverteiler aufweist,
dadurch gekennzeichnet,
daß dem Vorverteiler (3) extruderseitig ein Verdrängerkegel (2) vorgeordnet ist, daß die Durchgangsbohrungen (4) in einer Trägerplatte (1) ausgebildet sind und am vorderen Ende der Trägerplatte (1) jeweils eine Lochscheibe (5) aufweisen, deren Bohrungen (6) einen einlaßseitigen Bereich (7) mit größerem und einen auslaßseitigen Bereich (8) mit kleinerem Querschnitt aufweisen, wobei der Übergangsbereich (9) zwischen den beiden Bereichen gegen die Längsachse (10) der Bohrungen (6) mit einem Winkel ($\alpha$) von 55° bis 65° geneigt ist und daß der Verdrängerkegel (2) und die Umlenkplatte (11) derart ausgebildet sind, daß die Längen der Wege der zu granulierenden Formmasse zu den der Längsachse (17) des Granulierkopfes am nächsten und zu den am weitesten entfernt liegenden Bohrungen (16) des Vorverteilers (3) in etwa gleich sind.

2. Vorrichtung nach Anspruch 1,
dadurch gekennzeichnet,
daß die Durchgangsbohrungen (4) im wesentlichen den gleichen Durchmesser wie die Lochscheiben (5) haben.

3. Vorrichtung nach Anspruch 1 oder 2,
gekennzeichnet durch
eine extruderseitig hinter dem Verdrängerkegel (2) angeordnete Umlenkplatte (11), deren axiale Bohrung (12) sich im wesentlichen vom Durchmesser der Extruderschnecke bis im wesentlichen zum Durchmesser des Vorverteilers (3) vergrößert.

4. Vorrichtung nach Anspruch 3,
dadurch gekennzeichnet,
daß die inneren Flächen (13) der Umlenkplatte (11) ausschließlich abgerundete Kanten (14) aufweisen.

5. Vorrichtung nach Anspruch 3 oder 4,
dadurch gekennzeichnet,
daß der Abstand zwischen der zum Extruder weisenden Fläche (15) des Verdrängerkegels (2) und der dieser gegenüberliegenden inneren Fläche (13) der Umlenkplatte (11) im wesentlichen konstant ist.

6. Vorrichtung nach einem der Ansprüche 1 bis 5,
dadurch gekennzeichnet,
daß der Abstand zwischen der extruderseitigen äußeren Querschnittsfläche (18) des Vorverteilers (3) und der dieser Fläche (18) gegenüberliegenden Fläche (19) des Verdrängerkegels mindestens 3 % des Durchmessers des Vorverteilers (3) beträgt.

7. Vorrichtung nach einem der Ansprüche 1 bis 6,
dadurch gekennzeichnet,
daß der Durchmesser des auslaßseitigen Bereichs (8) der Bohrungen (6) in der Lochscheibe (5) zwischen 0,5 und 1,0 mm liegt.

8. Vorrichtung nach einem der Ansprüche 1 bis 7,
dadurch gekennzeichnet,
daß die Länge der Bohrungen (6) in der Lochscheibe (5) zwischen dem 1,5- und 2-fachen des Durchmessers des auslaßseitigen Bereichs (8) liegt.

9. Vorrichtung nach einem der Ansprüche 1 bis 8,
dadurch gekennzeichnet,
daß der Durchmesser des einlaßseitigen Bereichs (7) der Bohrung (6) in der Lochscheibe (5) zwischen dem 1,7- und 3-fachen des Durchmessers des auslaßseitigen Bereichs (8) liegt.

10. Verwendung eines Extruders nach einem der Ansprüche 1 bis 9 zum Granulieren von Enzymkonzentraten für Waschmittel.

11. Verwendung nach Anspruch 10,
dadurch gekennzeichnet,
daß das Enzymkonzentrat mit Drücken von 80 bis 200 bar, insbesondere von 110 bis 150 bar, durch den Granulierkopf gepreßt wird.

## Claims

1. A machine for the granulation of a plastic moulding compound which does not flow under gravity, more particularly an enzyme concentrate suitable for detergents, comprising a granulation head adjoining an extruder which, on its outlet side, comprises a number of bore-like passages and, on the extruder side, a preliminary distributor in the form of a perforated plate arranged at a distance from the extruder screw and the bore-like passages, characterized in that the preliminary distributor (3) is preceded by a displacement cone (2), in that the bore-like passages (4) are formed in a support plate (1) and, at the front end of the support plate (1), comprise a perforated disc (5) of which the bores (6) have an inlet-end zone (8) of relatively large cross-section and an outlet-end zone (8) of relatively small cross-section, the transition zone (9) between the two zones being inclined at an angle ($\alpha$) of 55 to 65° relative to the longitudinal axis (10) of the bore (6) and in that the displacement cone (2) and the baffle plate (11) are designed so that the lengths of the paths of the moulding compound to be granulated to the bores (16) of the preliminary distributor (3) situated nearest the longitudinal axis (17) of the granulation head and those situated furthest therefrom are substantially the same.

2. A machine as claimed in claim 1, characterized in that the bore-like passages (4) have susbtantially the same diameter as the perforated discs (5).

3. A machine as claimed in claim 1 or 2, characterized by a baffle plate (11) which is arranged behind the displacement cone (2) on the extruder side and of which the axial bore (12) increases in diameter substantially from the diameter of the extruder screw to substantially the diameter of the preliminary distributor (3).

4. A machine as claimed in claim 3, characterized in that the inner surfaces (13) of the baffle plate (11) have only rounded edges (14).

5. A machine as claimed in claim 3 or 4, characterized in that the distance between that surface (15) of the displacement cone (2) which faces the extruder and the opposite inner surface (13) of the baffle plate (11) is substantially constant.

6. A machine as claimed in any of claims 1 to 5, characterized in that the distance between the outer cross-sectional area (18) of the preliminary distributor (3) on the extruder side and the surface (19) of the displacement cone opposite the area (18) is 3% of the diameter of the preliminary distributor (3).

7. A machine as claimed in any of claims 1 to 6, characterized in that the diameter of the outlet-end-zone (8) of the bores (6) in the perforated disc (5) is between 0.5 and 1.0 mm.

8. A machine as claimed in any of claims 1 to 7, characterized in that the length of the bores (6) in the perforated disc (5) is between 1.5 and 2 times the diameter of the outlet-end zone (8).

9. A machine as claimed in any of claims 1 to 8, characterized in that the diameter of the inlet-end zone (7) of the bore (6) in the perforated disk (5) is between 1.7 and 3 times the diameter of the outlet-end zone (8).

10. The use of an extruder as claimed in any of claims 1 to 9 for the granulation of enzyme concentrates for detergents.

11. The use claimed in claim 10, characterized in that the enzyme concentrate is forced through the granulation head under pressure of 80 to 200 bar end preferably under pressures of 110 to 150 bar.

**Revendications**

1. Dispositif pour la granulation d'une matière plastique moulable, ne s'écoulant pas par gravité, en particulier d'un concentré d'enzymes utilisable pour agents de lavage, avec une tête de granulation se raccordant à une extrudeuse, tête qui comporte du côté sortie un grand nombre d'alésages de passage et du côté de l'extrudeuse un distributeur avant placé à une certaine distance de la vis d'extrudeuse et des alésages de passage et réalisé en plaque à trous, dispositif caractérisé en ce qu'un cône de refoulement (2) est placé devant le distributeur avant (3) du côté de l'extrudeuse, en ce que les alésages de passage (4) sont réalisés dans une plaque support (1) et comportent à l'extrémité antérieure de la plaque support (1) respectivement un disque à trous (5), dont les perçages (6) ont une zone (7) côté entrée de section de passage plus grande et une zone (8) côté sortie de section plus petite, la zone de transition (9) entre ces deux zones étant inclinée par rapport à l'axe longitudinal (10) des alésages (6) d'un angle ($\alpha$) compris ente 55° et 65° et en ce que le cône de refoulement (2) et la plaque déflecteur (11) sont réalisés, de façon que les longueurs des voies de la masse plastique à granuler vers les alésages (16) du distributeur avant (3) situés le plus près de l'axe longitudinal (17) de la tête de granulation et vers ceux les plus éloignés de cet axe, soient sensiblement égales.

2. Dispositif selon la revendication 1, caractérisé en ce que les alésages de passage (4) ont essentiellement le même diamètre que les disques à trous (5).

3. Dispositif selon les revendications 1 ou 2, caractérisé par une plaque déflecteur (11) disposée du côté extrudeuse derrière le cône de refoulement (2), plaque dont le diamètre de son perçage axial (12) va en augmentant du diamètre de la vis d'extrudeuse essentiellement jusqu'au diamètre du distributeur avant (3).

4. Dispositif selon la revendication 3, caractérisé en ce que les faces intérieures (13) de la plaque déflecteur (11) ont exclusivement des arêtes arrondies.

5. Dispositif selon les revendications 3 ou 4, caractérisé en ce que la distance entre la face (15) du cône de refoulement (2) par rapport à l'extrudeuse et la face (13) de la plaque déflecteur (11) opposée à la face (15) est essentiellement constante.

6.  Dispositif selon une des revendications 1 à 5, caractérisé en ce que la distance entre la face (18) de la section transversale extérieure côté extrudeuse du distributeur avant (3) et la face (19) du cône de refoulement située en face de cette face (18) est au moins 3% du diamètre du distributeur avant (3).

7.  Dispositif selon une des revendications 1 à 6, caractérisé en ce que le diamètre de la zone (8) côté sortie des alésages (6) du disque à trous (5) se situe entre 0,5 et 1 mm.

8.  Dispositif selon une des revendications 1 à 7, caractérisé en ce que la longueur des alésages (6) du disque à trous (5) se situe entre 1,5 et 2 fois le diamètre de la zone (8) côté sortie.

9.  Dispositif selon une des revendications 1 à 8, caractérisé en ce que le diamètre de la zone (7) côté entrée des alésages (6) du disque à trous (5) se situe entre 1,5 et 3 fois le diamètre de la zone (8) du côté sortie.

10. Utilisation d'une extrudeuse selon une des revendications 1 à 9 pour la granulation de concentrés d'enzymes destinés aux agents de lavage.

11. Utilisation selon la revendication 10, caractérisée en ce que le concentré d'enzymes est comprimé à travers la tête de granulation à des pressions entre 80 et 200 bars, en particulier entre 110 et 150 bars.

FIG.1

FIG. 2